# EUROPÄISCHE PATENTSCHRIFT

(11) **EP 1 246 062 B1**
(45) Veröffentlichungstag und Bekanntmachung des Hinweises auf die Patenterteilung: **25.04.2007**
(21) Anmeldenummer: 02004807.0
(22) Anmeldetag: 02.03.2002
(51) Int. Cl.: G06F 11/10

(54) **Verfahren zum Betrieb eines von einem Prozessor gesteuerten Systems**
Method of operating a processor-controlled system
Procédé d'opération d'un système commandé par processeur

(30) Priorität: 20.03.2001 DE 10113317
(43) Veröffentlichungstag der Anmeldung: 02.10.2002
(73) Patentinhaber: Conti Temic microelectronic GmbH, 90411 Nürnberg (DE)
(72) Erfinder: Dreves, Rainer, 90427 Nürnberg (DE)

(56) Entgegenhaltungen:
- WO-A-98/18108
- DE-A- 19 532 144
- US-A- 5 553 238
- US-A- 6 098 194

## Beschreibung

Die Erfindung betrifft ein Verfahren zum Betrieb eines von einem Prozessor gesteuerten Systems nach dem Oberbegriff des Patentanspruchs 1.
Prozessorgesteuerte Systeme, bsp. durch Mikroprozessoren oder Mikrocontroller gesteuerte Systeme, werden für vielfältige Anwendungen eingesetzt, insbesondere zur Ausführung vorgegebener Funktionen oder Abläufe. Die hierfür benötigten Daten werden in den Speicherzellen einer Speichereinheit des Systems gespeichert, oftmals in einer nicht-flüchtigen Speichereinheit, bsp. in einem EEPROM. Im Betrieb des prozessorgesteuerten Systems können bei defekten Speicherzellen oder einer defekten Speichereinheit die gespeicherten Daten nicht oder nur fehlerhaft gelesen werden, so daß vom Prozessor falsche Daten verwendet werden; hierdurch kann ein Anwendungsfehler auftreten, bsp. wird ein falscher Ablauf oder eine nicht beabsichtigte Funktion ausgeführt. Dieses Fehlverhalten ist unerwünscht und störend und muß insbesondere bei prozessorgesteuerten Systemen zur Ausführung sicherheitskritischer Anwendungen (bei Kraftfahrzeugen bsp. den Tempomat, den Airbag oder die Lenkwinkelerkennung betreffende Anwendungen) ausgeschlossen werden.
Es sind unterschiedliche Verfahren gebräuchlich, um defekte Speicherzellen der Speichereinheit und damit falsche Daten zu erkennen; bsp. können die Daten in der Speichereinheit mehrfach abgespeichert werden, so daß unter Berücksichtigung dieser Redundanz mittels Plausibilitätsbetrachtungen auf den richtigen Speicherinhalt geschlossen werden kann. Jedoch können hiermit einerseits Defekte der gesamten Speichereinheit (bsp. ist die Speichereinheit physikalisch zerstört oder nicht vorhanden oder die Speichereinheit wird nicht angesteuert) nicht erkannt werden, andererseits kann, falls alle Speicherzellen konstante Werte aufweisen (bsp. sind alle Bits der Speicherzellen 0 oder 1), nicht zwischen fehlerhaften und korrekten Daten unterschieden werden. Zudem ist im Fehlerfall ein weiterer Betrieb des prozessorgesteuerten Systems nicht möglich.

Aus der WO 98/18108 ist ein Verfahren zur Verwaltung von Integrationsfehlern von in einen überschreibbaren Speicher einer elektronischen Komponente, zum Beispiel einer Bankkarte, geschriebenen Daten bekannt. Dabei wird eine erste Kontrollsumme, ausgehend vom Wert der in den Speicher geschriebenen Daten berechnet und anschließend in den Speicher geschrieben. Wenn ein Integrationsfehler bei der Buchung der ersten Kontrollsumme auftritt, wird dieser bei der nachfolgenden Operation festgestellt, da zu Beginn der Operation eine zweite Kontrollsumme ausgehend vom Wert der im Speicher vorhandenen Daten berechnet und die zweite Kontrollsumme mit der ersten Kontrollsumme verglichen wird.

Ferner ist aus der US 6,098,194 A ein komplexes Verfahren zur Berechnung einer Prüfsumme über einen Speicherbereich zum Zweck der Erfassung von Speicherproblemen in einem Computer bekannt. Das Verfahren zeichnet sich dadurch aus, dass die Prüfsumme bei Änderungen eines Speicherinhaltes leicht aktualisiert werden kann.

Der Erfindung liegt die Aufgabe zugrunde, ein Verfahren zum Betrieb eines von einem Prozessor gesteuerten Systems gemäß dem Oberbegriff des Patentanspruchs 1 anzugeben, bei dem der korrekte Betrieb des Systems auf einfache und kostengünstige Weise überwacht und gewährleistet werden kann.
Diese Aufgabe wird erfindungsgemäß durch die Merkmale im Kennzeichen des Patentanspruchs 1 gelöst.
Vorteilhafte Ausgestaltungen des Verfahrens sind Bestandteil der weiteren Patentansprüche.

Die in der Speichereinheit des von einem Prozessor gesteuerten Systems (bsp. in einem EEPROM) nicht-flüchtig gespeicherten Daten werden entsprechend ihrer funktionellen Zusammengehörigkeit in Datenbereiche unterteilt, die jeweils aus mindestens einem, eine bestimmte Anzahl von Bits aufweisenden Datenwort bestehen; ein Datenbereich kann somit ein Datenwort oder mehrere Datenwörter umfassen. Jedem Datenbereich wird ein Prüfwort zugeordnet, das (vorzugsweise von einer Funktionseinheit des Prozessors) durch Anwendung einer (einfachen) algebraischen Operation auf die Prüfsumme als Summe des Binärcodes aller Datenwörter des Datenbereichs (bsp. ohne Berücksichtigung eines Überlaufs) generiert wird, insbesondere durch Anwendung einer arithmetischen oder logischen Operation auf die Prüfsumme; die algebraische Operation wird hierbei so gewählt; daß sich das dem Datenbereich zugeordnete Prüfwort von den Datenwörtern des Datenbereichs unterscheidet, d.h. daß bei identischen Datenwörtern eines Datenbereichs das zugeordnete Prüfwort hiervon abweichen muß. Als algebraische Operation wird insbesondere eine Operation aus dem Befehlssatz der zentralen Prozessoreinheit (CPU) des Prozessors herangezogen, bsp. eine typische CPU-Operation wie Addition, Schiebeoperation oder Bitmanipulation; bsp. wird das Prüfwort durch Differenzbildung (Subtraktion) zwischen der Prüfsumme und einem festen Wert generiert (d.h. durch Subtraktion der Prüfsumme von einem vorgegebenen Wert) oder mittels einer logischen XOR-Verknüpfung der Prüfsumme. Beim Schreiben der Daten werden die Datenwörter eines Datenbereichs und das zugeordnete Prüfwort in die entsprechenden Speicherzellen der nicht-flüchtigen Speichereinheit abgelegt. Beim Lesen der Daten (der in der nicht-flüchtigen Speichereinheit enthaltenen Information) und damit des Inhalts der Speicherzellen, wird für jeden Datenbereich durch Summation der gelesenen Datenwörter ebenfalls eine Prüfsumme gebildet und auf diese die gleiche beim Schreiben der Daten zur Generierung des Prüfworts verwendete algebraische Operation angewendet; das hierdurch generierte Prüfwort wird mit dem gelesenen, in der Speichereinheit gespeicherten, dem Datenbereich zugeordneten Prüfwort verglichen. Bei Unterschieden zwischen den beiden Prüfwörtern, d.h. bei einer Abweichung des beim Lesen anhand der gelesenen Datenwörter generierten Prüfworts vom gelesenen gespeicherten Prüfwort, ist ein Datenfehler im betreffenden Datenbereich vorhanden; insbesondere kann hierdurch auch ein Ausfall von gesamten Datenbereichen und damit auch der gesamten Speichereinheit erkannt werden - in diesem Falle besitzen sowohl die Datenwörter als auch das Prüfwort eines Datenbereichs den gleichen Wert (bsp. den Wert 0), der sich vom beim Lesen anhand der gelesenen Datenwörter generierten Prüfwort unterscheidet. Ist ein Fehler in der Speichereinheit erkannt, können den Datenwörtern des als fehlerhaft erkannten Datenbereichs bestimmte Standardwerte ("Defaultwerte") zugeordnet werden, mit denen ein weiterer (eingeschränkter) Betrieb des prozessorgesteuerten Systems möglich ist (das prozessorgesteuerte System wird bei einem Fehler nicht komplett außer Funktion gesetzt). Insbesondere kann auch bei der ersten Inbetriebnahme des prozessorgesteuerten Systems (bei der Initialisierung) eine gelöschte nicht-flüchtige Speichereinheit erkannt werden, so daß in diesem Falle bestimmte Standardwerte (Defaultwerte) für die Datenwörter verwendet werden können, mit denen eine Initialisierung des prozessorgesteuerten Systems durchgeführt werden kann (eine manuelle Inbetriebnahme des prozessorgesteuerten Systems ist somit nicht erforderlich).

Vorteilhafterweise können mit dem vorgestellten Verfahren Datenfehler in der Speichereinheit eines prozessorgesteuerten Systems ohne das Erfordernis zusätzlicher Hardware (insbesondere an Speicherzellen) und damit auf einfache und kostengünstige Weise erkannt werden (insbesondere kann ein Fehlerfall eindeutig von einem Nicht-Fehlerfall unterschieden werden), so daß sich Fehlfunktionen des prozessorgesteuerten Systems aufgrund von Fehlern der Speicherzellen der Speichereinheit (insbesondere bei defekten, gelöschten, nicht vorhandenen oder nicht ansteuerbaren Speicherzellen) oder der gesamten Speichereinheit (insbesondere bei einer defekten, gelöschten, nicht vorhandenen oder nicht ansteuerbaren Speichereinheit) vermeiden lassen und die korrekte Ausführung der Funktionalität des prozessorgesteuerten Systems (insbesondere bei sicherheitskritischen prozessorgesteuerten Systemen) gewährleistet ist. Da im Fehlerfall beim Erkennen einer defekten Speicherzelle oder defekten Speichereinheit ein Betrieb des prozessorgesteuerten Systems aufrechterhalten werden kann, insbesondere ist ein weiterer Betrieb des prozessorgesteuerten Systems (mit sinnvollen Standardwerten) möglich, wird eine hohe Verfügbarkeit des prozessorgesteuerten Systems gewährleistet.

Im Zusammenhang mit der Zeichnung soll das Verfahren anhand eines Ausführungsbeispiels weiter erläutert werden.
Hierbei zeigt:
- Figur 1: einen in der Speichereinheit des prozessorgesteuerten Systems gebildeten Datenbereich mit unterschiedlichen Datenwörtern,
- Figur 2: einen in der Speichereinheit des prozessorgesteuerten Systems gebildeten Datenbereich mit gleichen Datenwörtern.

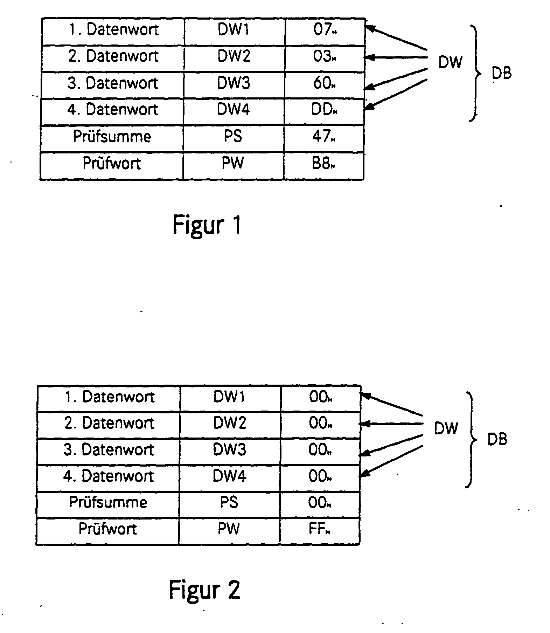

Das prozessorgesteuerte System ist bsp. ein von einem Mikrocontroller gesteuertes Steuergerät eines Kraftfahrzeugs, insbesondere ein Steuergerät zur Ausführung sicherheitskritischer Bedienfunktionen bei einem Kraftfahrzeug. Vom Mikrocontroller werden bsp. Steuerdaten eingelesen; abhängig von diesen Steuerdaten werden die Funktionen des Steuergeräts realisiert. Der Mikrocontroller weist als Funktionseinheiten bsp. eine zentrale Prozessoreinheit (CPU), eine bsp. als EEPROM ausgebildete nicht-flüchtige Speichereinheit mit einer Vielzahl von Speicherzellen (bsp. 8 kBit bzw. 1 kByte) und eine Recheneinheit auf.
Als Steuerdaten zur Realisierung der Funktionen des Steuergeräts können bis zu 800 Datenwörter DW vorgesehen werden. Bsp. umfassen die in der nicht-flüchtigen Speichereinheit gebildeten Datenbereiche DB mehrere Datenwörter DW, bsp. wird einer der Datenbereiche DB aus vier Datenwörtern DW1 - DW4 mit jeweils 8 Bit gebildet. Exemplarische Werte dieser vier Datenwörter DW1 - DW4 des Datenbereichs DB sind in der Figur 1 und der Figur 2 in hexadezimaler Schreibweise dargestellt; hierbei unterscheiden sich gemäß der Figur 1 die vier Datenwörter DW1 - DW4 des Datenbereichs DB voneinander, während gemäß der Figur 2 die vier Datenwörter DW1 - DW4 des Datenbereichs DB identisch sind (bsp. besitzen alle vier Datenwörter DW1 - DW4 des in der Figur 2 dargestellten Datenbereichs DB den gleichen Wert 00_{"}). Die Datenwörter DW1 - DW 4 eines Datenbereichs DB werden in unterschiedliche Speicherzellen der Speichereinheit abgelegt (in einer Speicherzelle können hierbei 8 Bit eines Datenworts DW gespeichert werden). Durch Summation der Werte der vier Datenwörter DW1 - DW4 des Datenbereichs DB wird unter Nichtberücksichtigung eines Überlaufs eine Prüfsumme PS gebildet; gemäß Figur 1 erhält man als Prüfsumme PS des Datenbereichs DB den Wert 47_{"}, gemäß Figur 2 als Prüfsumme PS des Datenbereichs DB den Wert 00_{"}. Auf die Prüfsumme PS wird eine algebraische Operation angewendet und hieraus ein Prüfwort PW generiert; bsp. wird hierzu auf die Prüfsumme PS die arithmetische Operation Prüfwort PW = FF_{"}-Prüfsumme PS angewendet, wodurch gewährleistet ist, daß nicht alle Datenwörter DW eines Datenbereichs DB und das dem Datenbereich DB zugeordnete Prüfwort PW identische Werte annehmen können. Nach Durchführung dieser arithmetischen Operation erhält man gemäß Figur 1 als Prüfwort PW den Wert B8_{"}, gemäß Figur 2 als Prüfwort PW den Wert FF_{"}. Beim Speichern der Datenwörter DW1 - DW4 eines Datenbereichs DB wird das zugehörige Prüfwort PW ebenfalls in einer Speicherzelle der Speichereinheit abgespeichert. Beim Lesen der Daten werden die Speichereinheit und die Speicherinhalte der Speicherzellen überprüft, indem bsp. von der CPU des Mikrocontrollers (anhand der gelesenen Datenwörter DW des Datenbereichs DB) die Prüfsumme PS jedes gelesenen Datenbereichs DB bestimmt wird und mittels der arithmetischen Operation Prüfwort PW = FF_{"}-Prüfsumme PS das entsprechende Prüfwort PW generiert wird. Dieses generierte Prüfwort PW wird beim Lesen der Daten mit dem in der Speichereinheit gespeicherten und ebenfalls gelesenen Prüfwort PW verglichen: entsprechen sich die beiden Prüfwörter PW, d.h. das generierte Prüfwort PW und das gelesene gespeicherte Prüfwort PW, ist der Speicherinhalt des Datenbereichs DB und des zugehörigen Prüfworts PW in Ordnung, d.h. die entsprechenden Speicherzellen der Speichereinheit und damit die Datenwörter DW des Datenbereichs DB und das Prüfwort PW weisen keinen Fehler auf; differiert dagegen das generierte Prüfwort PW vom gelesenen gespeicherten Prüfwort PW, ist der Speicherinhalt des Datenbereichs DB oder des zugehörigen Prüfworts PW nicht in Ordnung (bsp. aufgrund eines Fehlers der Speichereinheit oder einer fehlerhaften Speicherzelle der Speichereinheit). Bsp. kann aufgrund eines Ausfalls der gesamten Speichereinheit aus deren Speicherzellen keine Information abgerufen werden, so daß beim Lesen die Speicherinhalte aller Speicherzellen der Speichereinheit den gleichen Wert ergeben (daher weisen alle Datenwörter DW und die zugehörigen Prüfwörter PW beim Lesen den gleichen Wert auf, bsp. 00_{"}); durch Vergleich des generierten Prüfworts PW eines Datenbereichs DB mit dem gelesenen gespeicherten Prüfwort PW eines Datenbereichs DB kann entschieden werden, ob die Daten des Datenbereichs DB gültig sind (in diesem Falle muß entsprechend Figur 2 das gelesene Prüfwort PW richtigerweise FF_{"} lauten, also von 00_{"} verschieden sein) oder ungültig sind (in diesem Falle lautet das gelesene Prüfwort PW fälschlicherweise ebenfalls 00_{"}). Bei einem erkannten Fehler werden den Datenwörtern DW des betroffenen Datenbereichs DB Standardwerte zugeordnet, mit denen die Funktionalität des Steuergeräts eingeschränkt aufrechterhalten werden kann.

## Patentansprüche

1. Verfahren zum Betrieb eines von einem Prozessor gesteuerten Systems, dessen Daten in einer nicht-flüchtigen Speichereinheit gespeichert werden, wobei
- beim Speichern der Daten aus mindestens einem Bit bestehende Datenwörter (DW) und Datenbereiche (DB) aus mindestens einem Datenwort (DW) gebildet werden,
- durch Summation der Datenwörter (DW) eines Datenbereichs (DB) eine Prüfsumme (PS) und aus dieser Prüfsumme (PS) mittels einer vorgegebenen algebraischen Operation ein Prüfwort (PW) generiert und als zum Datenbereich (DB) gehörig abgespeichert wird,
- beim Lesen der gespeicherten Daten durch Summation der gelesenen Datenwörter (DW) eines Datenbereichs (DB) eine Prüfsumme (PS) gebildet wird, und aus dieser Prüfsumme (PS) mittels der vorgegebenen algebraischen Operation ein Prüfwort (PW) generiert wird, das mit dem zum Datenbereich (DB) gehörigen gelesenen Prüfwort (PW) verglichen wird und
- bei einer Abweichung des anhand der gelesenen Datenwörter (DW) generierten Prüfworts (PW) vom gelesenen gespeicherten Prüfwort (PW) ein Fehler in den gespeicherten Daten erkannt wird,
**dadurch gekennzeichnet, daß**
die algebraische Operation so gewählt wird, daß sich das zu einem Datenbereich (DB) gehörige Prüfwort (PW) bei identischen Datenwörtern (DW) eines Datenbereichs (DB) von den Datenwörtern (DW) des Datenbereichs (DB) unterscheidet.

2. Verfahren nach Anspruch 1 , **dadurch gekennzeichnet, daß** als algebraische Operation, mittels der aus der Prüfsumme (PS) ein Prüfwort (PW) generiert wird, eine arithmetische Operation verwendet wird.

3. Verfahren nach Anspruch 2, **dadurch gekennzeichnet, daß** als arithmetische Operation die Differenz zwischen der Prüfsumme (PS) und einem von Null verschiedenen Zahlenwert verwendet wird.

4. Verfahren nach Anspruch 1 , **dadurch gekennzeichnet, daß** als algebraische Operation eine logische Operation verwendet wird.

5. Verfahren nach Anspruch 4, **dadurch gekennzeichnet, daß** als logische Operation eine XOR-Verknüpfung der Prüfsumme (PS) verwendet wird.

6. Verfahren nach einem der Ansprüche 1 bis 5, **dadurch gekennzeichnet, daß** bei einem Fehler in den gespeicherten Daten eines Datenbereichs (DB) für die Datenwörter (DW) des Datenbereichs (DB) Standardwerte vorgegeben werden.

7. Verfahren nach Anspruch 6, **dadurch gekennzeichnet, daß** der Betrieb des Systems mit den Standardwerten durchgeführt wird.

8. Verfahren nach Anspruch 6 oder 7, **dadurch gekennzeichnet, daß** eine Initialisierung des Systems mit den Standardwerten durchgeführt wird.

9. Verfahren nach einem der Ansprüche 1 bis 8, **dadurch gekennzeichnet, daß** die den Datenbereichen (DB) zugehörigen Prüfwörter (PW) von der zentralen Recheneinheit des Prozessors berechnet werden.

## Claims

1. A method for operating a processor-controlled system, the data of which is stored in a permanent memory unit, whereby
- when the data is stored, data words (DW) consisting of at least one bit and data areas (DB) consisting of at least one data word (DW) are formed
- using the summation of the data words (DW) of a data area (DB), a check sum (PS), and from this check sum (PS) a check word (PW) is generated using a specified algebraic operation, and is stored as belonging to the data area (DB)
- when the stored data is read, summation of the read data words (DW) of a data area (DB) is used to form a check sum (PS), and from this check sum (PS), a check word (PW) is generated using the specified algebraic operation, which is compared with the read check word (PW) which belongs to the data area (DB), and
- if a deviation occurs between the check word (PW) which is generated based on the read data words (DW) and the read, stored check word (PW), an error is detected in the stored data,
**characterized in that**
the algebraic operation is selected in such a manner that the check word (PW) which belongs to a data area (DB) differs, in case of identical data words (DW) of a data area (DB), from the data words (DW) of the data area (DB).

2. A method according to claim 1, **characterized in that** as an algebraic operation by means of which a check word (PW) is generated from the check sum (PS), an arithmetic operation is used.

3. A method according to claim 2, **characterized in that** as an arithmetic operation, the difference between the check sum (PS) and a numerical value which differs from zero is used.

4. A method according to claim 1, **characterized in that** as an algebraic operation, a logical operation is used.

5. A method according to claim 4, **characterized in that** as a logical operation, an XOR link of the check sum (PS) is used.

6. A method according to any one of claims 1 to 5, **characterized in that** when an error occurs in the stored data of a data area (DB) standard values are specified for the data words (DW) of the data area (DB).

7. A method according to claim 6, **characterized in that** the operation of the system is conducted using the standard values.

8. A method according to either of claims 6 or 7, **characterized in that** an initialisation of the system is conducted using the standard values.

9. A method according to any one of claims 1 to 8, **characterized in that** the check words (PW) which belong to the data areas (DB) are calculated by the central computing unit of the processor.

## Revendications

1. Procédé de fonctionnement d'un système commandé par processeur, dont les données sont enregistrées dans une unité de mémoire non volatile,
- des mots de données (DW) composés d'au moins un bit, et des zones de données (DB) d'au moins un mot de données (DW) étant formés lors de l'enregistrement des données,
- une somme de vérification (PS) étant générée par sommation des mots de données (DW) d'une zone de données (DB), et un mot de vérification (PW) étant généré à partir de cette somme de vérification (PS) au moyen d'une opération algébrique prédéfinie et étant enregistré comme appartenant à la zone de données (DB),
- une somme de vérification (PS) étant formée, lors de la lecture des données enregistrées, par sommation des mots de données (DW) lus d'une zone de données (DB), et un mot de vérification (PW) étant généré à partir de cette somme de vérification (PS) au moyen de l'opération algébrique prédéfinie, qui est comparé au mot de vérification (PW) lu appartenant à la zone de données (DB), et
- une erreur dans les données enregistrées étant détectée en cas de divergence du mot de vérification (PW), généré à l'aide des mots de données (DW) lus, par rapport au mot de vérification (PW) enregistré lu,
**caractérisé en ce que**
l'opération algébrique est choisie de sorte que le mot de vérification (PW) appartenant à une zone de données (DB) soit distinct des mots de données (DW) de la zone de données (DB) en cas de mots de données (DW) identiques d'une zone de données (DB).

2. Procédé selon la revendication 1, **caractérisé en ce que**, comme opération algébrique, au moyen de laquelle un mot de vérification (PW) est généré à partir de la somme de vérification (PS), on utilise une opération arithmétique.

3. Procédé selon la revendication 2, **caractérisé en ce que**, comme opération arithmétique, on utilise la différence entre la somme de vérification (PS) et une valeur numérique différente de zéro.

4. Procédé selon la revendication 1, **caractérisé en ce que**, comme opération algébrique, on utilise une opération logique.

5. Procédé selon la revendication 4, **caractérisé en ce que**, comme opération logique, on utilise une opération OU exclusif de la somme de vérification (PS).

6. Procédé selon une des revendications 1 à 5, **caractérisé en ce que**, en cas d'erreur dans les données enregistrées d'une zone de données (DB), des valeurs standards sont prédéfinies pour les mots de données (DW) de la zone de données (DB).

7. Procédé selon la revendication 6, **caractérisé en ce que** le fonctionnement du système est exécuté avec les valeurs standards.

8. Procédé selon la revendication 6 ou 7, **caractérisé en ce qu'**une initialisation du système est effectuée avec les valeurs standards.

9. Procédé selon une des revendications 1 à 8, **caractérisé en ce que** les mots de vérification (PW) appartenant aux zones de données (DB) sont calculés par l'unité centrale du processeur.
